# EUROPEAN PATENT SPECIFICATION

(11) **EP 0 811 449 B1**
(45) Date of publication and mention of the grant of the patent: **11.07.2001**
(21) Application number: 97302347.6
(22) Date of filing: 04.04.1997
(51) Int. Cl.: B23B 51/00, B23B 51/04, B23B 49/00

(54) **Multistage bit and stopper for said multistage bit**
Mehrstufenbohrer und Anschlagvorrichtung für dengleichen
Foret à diamètres multiples et butée d'arrêt pour celui-ci

(30) Priority: 05.06.1996 JP 14263796
(43) Date of publication of application: 10.12.1997
(73) Proprietor: Kabushiki Kaisha Miyanaga, Miki-shi, Hyogo 673-04 (JP)
(72) Inventor: Miyanaga, Masaki, Ashiya-shi, Hyogo 659 (JP)
(74) Representative: West, Alan Harry

(56) References cited:
- EP-A- 0 515 274
- WO-A-83/01215
- DE-A- 3 332 968
- DE-A- 19 526 686
- FR-A- 1 080 865
- GB-A- 840 701
- US-A- 3 645 640
- "Eugen Dürr, Stuttgart" WERKSTATTSTECHNIK, vol. 64, no. 9, 1974, page 588 XP002040363

## Description

This invention relates to a multistage bit with several drilling stages for drilling a hole of a selected diameter, and and to an assembly of such a bit and a stop member by means of which drilling at a selected drilling stage can be restricted.

In the prior art device described in DE-A-19526686, as shown in Fig. 7, there has been provided a multistage bit in accordance with the preamble of claim 1 with several drilling stages and having a base part A whose whole profile is a stepped conical body with its tip cut off, including a longitudinal groove 1 extending from the large diameter part to the small diameter part of the stepped conical body, and a blade B directed forward of the rotating direction and downward and projecting outward in the radial direction and from the lower end of each drilling stage. The blade B of each stage is formed on the periphery 2 on the rear side in the rotating direction of the groove la on which the longitudinal groove 1 of each stage is formed. This prior art multistage bit has been utilized for drilling steel plates having a thickness less than one stage, and wherein the drilling of a hole corresponding to one of the stages can be performed by using a respective one of several drilling stages ranging from the stage 2a of smallest diameter to the stage 2x of largest diameter, with this single bit.

In particular, in the case of this prior art multistage bit, the shank 3 to be set on the drilling machine side (drilling machine or portable electromotive drill), the base part A, and the tip drill 4 of the smallest diameter at the tip have been integrally formed in one piece.

During drilling, for example using the fourth stage from the tip, the procedures are such that the shank 3 is set to the drilling machine, and drilling is carried out sequentially, first with the tip drill, then with the second stage, and next with the third stage, and thereafter with the desired fourth stage.

For this reason, the tip drill and the blades closer to the tip have a higher frequency of use, and accordingly, the tip drill and the blade doser to the tip are subject to much more abrasion and damage than the other parts.

As a result, because of the fact that, contrary to the slight abrasion of the blades near the shank, the blades closer to the tip show significantly more abrasion or damage, the situation makes it necessary to scrap the whole multistage bit, especially when the tip drill has been damaged immediately after the commencement of drilling work using a new bit. There may even occur such a situation that the multistage bit must be scrapped without having used any blade on the rest of the stages. Also, due to the frequent occurrence of breakage on the tip drill having smaller diameter, this defect has provided a significant problem in production efficiency.

In an alternative arrangement described in WO 83/01215, a plurality of separate drill members having different drill diameters are attached together in sequence to from a stepwise increase in diameter.

The present invention has been made with a view to meeting the prior art problems indicated above and seeks to provide a multistage bit which is partially replaceable, and its combination with a stop member which is best suited to such a multistage bit.

In accordance with the present invention, there is now provided a multistage bit having a base part with a profile in the form of a stepped conical body, each step corresponding to a respective drilling stage, including a longitudinal groove from the large diameter step to the small diameter step and a blade projecting forward, downward and radially outward from the lower edge of each step at the peripheral trailing edge of the longitudinal groove thereby making it possible to drill a hole with a diameter corresponding to the desired drilling stage, and a tip drill stage having a blade of a diameter equal to or less than that of the small diameter step,
characterized by:
the tip drill stage being detachably mounted on the base part;
a shank to which the base part is detachably mounted;
a through-hole formed axially in the base part, and a center bit having a base passing through the hole and detachably mounted on the shank; and
a center sleeve detachably mounted between the shank and the center bit.

Therefore, in the multistage bit constructed in accordance with the invention, when the tip drill which has the highest frequency of use and the largest possibility of damage in use is broken, only the tip drill itself needs to be replaced by a new part, so that it is not necessary to scrap the entire multistage bit including the expensive base part.

In the preferred feature of the multistage bit of this invention, the longitudinal groove coils upward in the reverse direction to the rotating direction on the stepped conical body (referring to the spiral form which advances to the shank side by rotating from the tip side in reverse direction to the rotating direction), and it is then possible to discharge the waste chips cut with the blade, smoothly upwards.

Also, when the blade is constructed to have a rake angle equal to the spiral inclination of the longitudinal groove and the front face of the blade substantially aligns with the periphery of the rear side in the direction of rotation of the longitudinal groove, it is possible to discharge the waste chips more smoothly without interference by the blade above.

It is desirable for each blade of the base part to be formed by inserting a carbide chip in the rear side periphery of the longitudinal groove, so that the base can be manufactured from an ordinary low-priced steel material, and only the blade may be provided by welding such as by brazing in the carbide chip. A carbide chip blade has excellent cutting performance and durability, so that production can be made at low cost and productivity can be increased. In addition, the multistage bit can maintain good cutting performance over a long period of time, and has excellent durability.

Furthermore, since the shank for fitting the base to the drilling machine is detachably connected to the base, the base which sustains abrasion can be replaced, and a multistage bit which shows little wear can still be utilized.

Additionally, since a through-hole is formed axially in the base, and a center bit having a base fitted to the tip of the shank which projects from the tip of the through-hole, so that position setting of the multistage bit is facilitated in the drilling work, it becomes possible to bore the initial through-hole in a short time. Accordingly, in providing the desired drilling, the whole drilling time can be shortened.

Moreover, since the center sleeve is provided between the shank and the center bit, a commercially available drill may be used as a center bit. If the size of the center sleeve is provided in a larger diameter, it increases the strength of the center drill bit against buckling forces to further reduce the risk of breakage of the center bit.

In accordance with a further aspect of the invention, there is provide an assembly of a multistage bit according to the invention and a stop member comprising a split ring member having a free diameter slightly less than that of a specified stage of the multistage bit, one end of the split ring member being inwardly formed to enter and to be engaged by a mounting groove formed on the multistage bit, and the height of the split ring member being equal to or slightly greater than the height of the specified stage.

The stop member may be selected to match the diameter of the stage to which it is to be fitted and simply fitted to that desired stage from the tip side of the multistage bit in an expanded state. In so doing, if fitting is made so that the inwardly formed end of the stop member enters into the longitudinal groove, the stop member should be engaged in the direction of rotation. If the stop member is fitted with its upper end in contact with the lower face of the next upper drill stage, the upper end of the stop member is fixed in the axial direction by that upper drill stage. Also, by mounting the stopper as above, even during rotation of the multistage bit to bore a hole the multistage bit will be stopped at the predetermined stage so that drilling is carried out until the lower end of the stop member comes into contact with the object to be cut and no further cutting can be achieved, and the hole of the desired diameter is thereby provided.

Such a stop member is suitably constructed of spring steel, which has strong elasticity and is desirable as the stop member is strongly fixed to and held by the multistage bit. Additionally, it is easy to construct and readily attached, except that a respective stop member is required for each stage.

In accordance with another aspect of the invention, there is provided an assembly of a multistage bit according to the invention and a stop member comprising a hollow cylindrical form having an inner diameter which is approximately equal to the outer diameter of the uppermost stage of the multistage bit, a plurality of axially spaced stop elements on the interior surface of the cylindrical form with a pitch equal to the pitch of the drilling stages and the lower most stop element being spaced from the lower edge of the cylindrical form by a distance equal to or slightly greater than the pitch of the drilling stages.

The cylindrical form stop member constructed as above may be fitted so that the stage of the multistage bit to be finally used is exposed from the lower end of the stop member. Accordingly, there is no need to provide several differently sized stop members to match the stage to be used. In the cylindrical form stop member, a single stop member can be used by shifting its position up or down to accommodate cutting using any stage of the multistage bit. Moreover, the stop member operates so that drilling work is carried out until the lower end of the stop member comes into contact with the object to be cut and no further cutting can be achieved, whereby the hole of the desired diameter can be provided.

In this cylindrical form stop member a recess is formed on the outer periphery of the uppermost stage or an adjacent flange, and, in this recess, a ball is mounted such that its peripheral surface projects from the recess and is freely movable to retract inside the recess. The stop elements of the stop member are formed by a plurality of projections on its inner peripheral surface so as to be engaged by the recess so that the ball is forced back and holds the cylindrical stop member to the flange.

In accordance with a yet further aspect of the invention, there is provided an assembly of a multistage bit according to the invention and a stop member comprising a stop pin insertable into a radial hole on each drilling stage to project radially and a flange member through which the stop pin is inserted into the hole to project from a desired drilling stage.

The flange stop member may be mounted, though the stop pin, to a radial hole formed on the stage above the stage of the multistage bit to be used in drilling. Accordingly, without requiring to provide different stop members to match the stage to be used, the stop pin and the stop member are appropriately changed in the arrangement to match the desired cutting stage of the multistage bit. Moreover, in the same manner as in the above stop members, the drilling work is carried out until the lower end of the stop member comes into contact with the object to be cut and no further cutting can be achieved, whereby the hole of a desired diameter is provided.

In this stop pin embodiment, a stop flange may be provided with its lower end extending to or slightly below the lower end of the desired cutting stage of the multistage bit.

The stop pin may be provided with a spring for urging the stop member against the stage of the multistage bit, so that the stop member is securely attached to the multistage bit.

The invention is described below in greater detail by way of example only with reference to the accompanying drawings, in which
Figs. 1(a) and (b) are exploded views showing the construction of a multistage bit according to the present invention, wherein Fig. 1(a) is an exploded view showing a shank and a center drill sleeve and tip drill to be fitted to the tip part thereof, and Fig. 1(b) is an exploded view showing the base of the multistage bit and the tip drill at the tip thereof;
Fig. 2(a) is a side elevational view of the multistage bit shown in Fig. 1 with each member assembled and the left half portion being sectioned, Fig. 2 (b) is a side elevational view illustrating a stop member fitted to the fifth stage of the multistage bit shown in Fig. 2(a), and 2(c) is a section taken along the line I-I in Fig. 2(b) showing the stop member fitting structure;

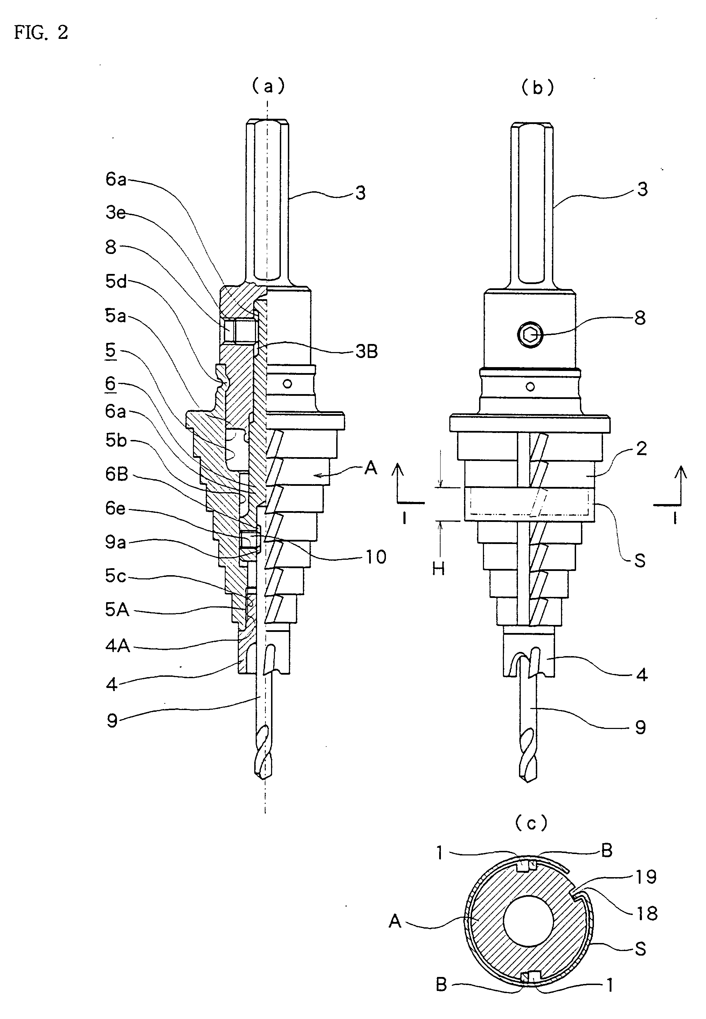

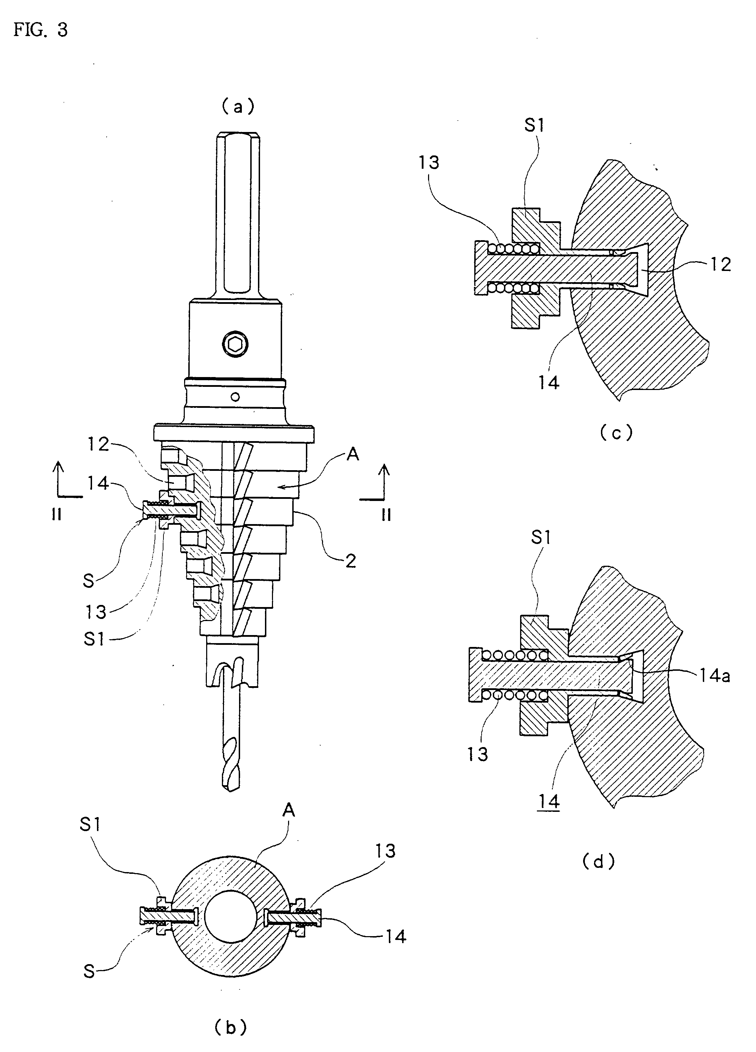

Fig. 3 is a view showing an alternative stop member having a different construction from that of Fig. 2(b), wherein Fig. 3(a) is a side elevational view of the multistage bit partially sectional, showing the condition in which the stop member is fitted, Fig. 3(b) is a sectional view of the stage taken along the line II-II f Fig. 3(a) showing the construction of the stop member, Fig. 3(c) is a partially enlarged section of Fig. 3(b) showing the condition of the stop member being fitted to or removed from the bit side, and Fig. 3(d) is a partially enlarged section of (b) showing the condition where the stop member attached to the bit;
Fig. 4 is a view showing another stop member having a construction different from those of Fig. 2(b) and Fig. 3, wherein Fig. 4(a) is a side view with the stop member sectioned, Fig. 4(b) is a secticn taken along the line III-III in Fig. 4(a);
Fig. 5 is an exploded view showing the construction of a multistage bit according to another embodiment of the present invention;
Fig. 6 is a side elevational view of the assembled multistage bit shown in Fig. 5 and a stopper fitted to the fourth stage; and

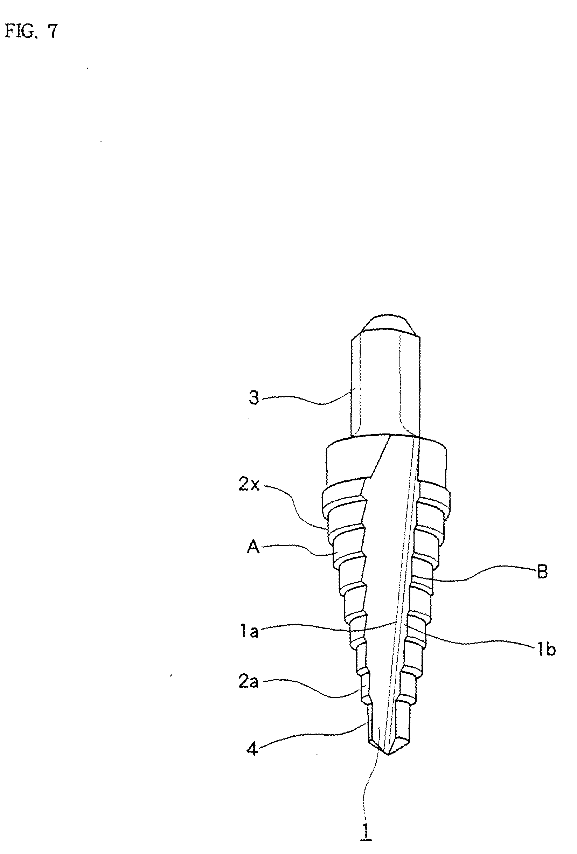

Fig. 7 is a perspective view showing the construction of the conventional, prior art multistage bit.

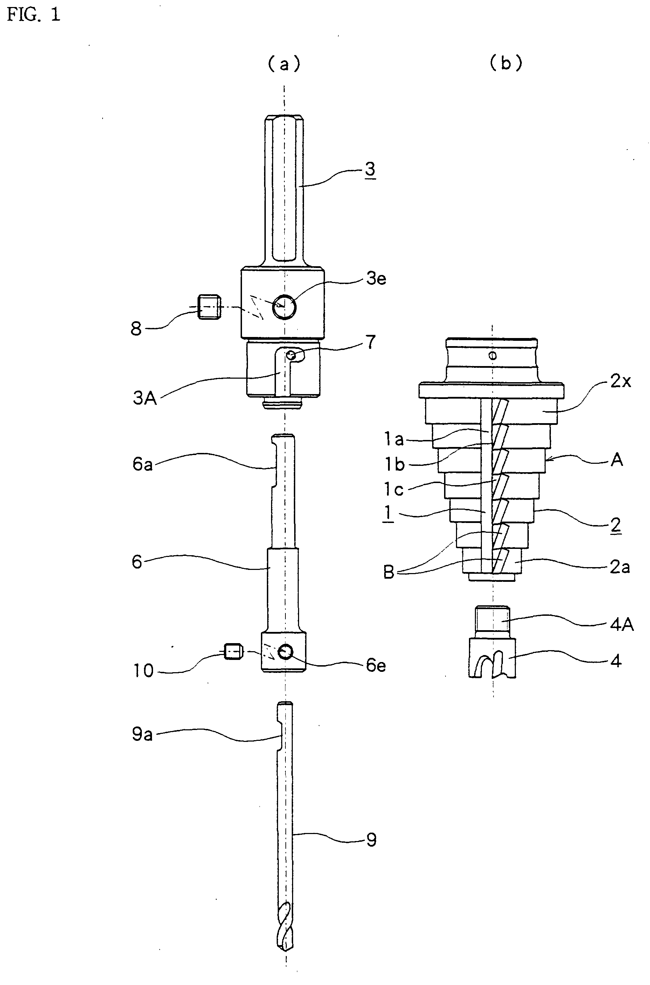

In Figs. 1 and 2, a base part A has the whole profile of a conical body with its tip cut off. A longitudinally extending groove 1 is formed from the large diameter portion to the small diameter part of the conically shaped base part A along its vertical direction (axial direction). A plurality of drilling stages 2 formed in steps from the stage 2a of the smallest diameter to the stage 2x of the largest diameter extend around the periphery of the base part A. A blade B is formed on the base part A at each stage 2. The multistage bit includes a shank 3, a tip drill 4, a center drill sleeve 6, and a center drill 9.

As illustrated in Fig. 1(b), on the base part A of this multistage bit the longitudinal (vertical) groove 1 is formed, and on the margin 1b on the rear side in the rotating direction of the groove 1a on which the vertical groove 1 of each stage 2a - 2x is formed, a carbide chip (hereinafter to be simply referred to as chip) to form the above blade B is welded (in this embodiment, brazed) in place. This chip faces forward in rotating direction and downward and projects from the periphery of the stage radially outward and from the lower end of the stage downward. Namely, the front face of the chip is aligned in the radial direction, and the upper end of the front face of the chip is inclined to the direction of rotation at about 25 degrees to the rear side in the direction of rotation to form a rake angle of the blade part B. The outside surface of the chip projects outward in the radial direction from the outer periphery of the base part A (stage 2), and the lower end of the chip projects downward from the lower surface of the stage 2 (2a - 2x). Also, on the front side in the direction of rotation of the chip, there is formed a recess 1c which communicates with an upper groove portion 1a, being arranged so that nearly the whole front face of the chip projects outward in the radial direction from the groove portion 1a and the outer periphery of the bit, thereby making it possible to cut the object to be cut (steel plate or the like) with the front face and the lower end of the chip. Also, as illustrated in Fig. 2(a), at the axial central part of the upper base part A, a through-hole 5 is formed over the full length of base part A. The upper part 5a of the through-hole 5 has a larger diameter so as to accommodate the tip of the shank 3 in a detachable manner. A lower central part 5b of the hole 5 is constructed so that a base end 6a of the center drill sleeve 6 is detachably inserted in a recess 3B of the upper shank part 3. Also, in the tip 5c of the upper through-hole 5, a female screw 5A is set, and the tip drill 4 of core drill shape includes a detachable male screw 4A at the base end.

As illustrated in Fig. 2 (a) , on the upper part 5a of the through-hole 5 in which the shank 3 is inserted, an inward projection 5d is provided, and at the tip of the shank 3, as illustrated in Fig. 1(a), there are formed three inverted L-shaped stop grooves 3A (in Fig. 1(a), only one is illustrated) through which the projection 5d is passable, and at the bottom of the groove of the L- shaped part of one stop groove 3A, a stop ball 7 retained with urging means such as a spring for stopping the projection 5d in the L- shaped position is disposed until it becomes almost flat against the groove bottom side. In other words, by the step of the projection 5d on the base A side passing over the stopping ball 7, the base A is engaged in the shank 3, and by its passing over in the opposite direction, the engagement is released and it becomes possible to move to the L-shaped open side.

Also, as illustrated in Fig. 2(a), fixing of the center drill sleeve 6 to the recess 3B of the shank 3 is attained by screwing the bolt (bolt with hexagonal hole) 8 into the hole 3e in the radial direction provided at a nearly central position of the vertical direction of the shank 3 in the recess 6a of the center drill sleeve 6, and by pressing the bottom face of the bolt 8 and holding the center drill sleeve 6. Accordingly, by loosening the bolt 8 with a tool (hexagonal wrench in case of a bolt with hexagonal hole), the center drill sleeve 6 can be detached in the axial direction.

Also, as illustrated in Figs. 1 and 2, in the above center drill sleeve 6, a recess 6B opened to the tip side (ref. Fig. 2(a)) is provided in the center of the shaft, so that the center drill 9 is fixed to the recess 6B. The fixing of this center drill 9 is accomplished by screwing in a bolt (e.g., a bolt having hexagonal hole) 10 into a radial hole 6e provided at the tip part of the center drill sleeve 6, by pressing and holding the center drill 9 to the center drill sleeve 6 at the bottom surface of the bolt 10. Accordingly, by loosening the bolt 10 with a tool (hexagonal wrench in case of a bolt with hexagonal hole), detachment of the center drill 10 in the axial direction becomes feasible.

As illustrated in Fig. 2(b), on the above multistage bit, there is provided a stop S according to one embodiment of the present invention for specifying the desired stage and preventing any further drilling. Namely, this stop S comprises, as illustrated in Fig. 2 (b) and (c), a split ring member having its free diameter slightly smaller than the diameter of the stage 2 desired to be fitted, and this member is constructed of an elastic material such as a spring steel or stainless steel having wide range of elastic deformation. As illustrated in Fig. 2(c), one end 18 of the ring is bent inward (toward the center) to engage in a vertical groove 19 of the multistage bit. Also, the height H (Fig. 2(b)) of this ring member is constructed to be at least equal to the height of each stage 2, and accurately set to be slightly greater than the height of the stage. Also, in this embodiment, the groove 19 is provided independently from the longitudinal groove 1 to engage the end 18 of the stop S, but the longitudinal groove 1 may be used if desired. Also, in use, the stop S is fitted to the corresponding stage 2 of the multistage bit with the stop S in a condition of being slightly expanded, so that the lower end of the stop is approximately positioned at the lower end of the stage to which it is fitted (accurately, the stop lower end is positioned to be slightly beyond the lower end of the stage). The stop S is held by the lower face of the upper stage 2 in an axial direction of the multistage bit, and in respect to the rotating direction, the bent end 18 is engaged in the above longitudinal groove 19 and by the spring action of the stop itself, it contracts in a radial direction to be held and maintained to the outer periphery of the desired stage 2 of the multistage bit.

Also, in the case of the stop S according to this embodiment, the respective stop having different ring diameters are required to fit each stage.

In this case, as described above, it is desirable for the free diameter of each stop S to be constructed as being slightly smaller than the diameter of the corresponding stage 2 so that the stop can be held by spring action, in improving the property of fitting of the stop to the multistage bit.

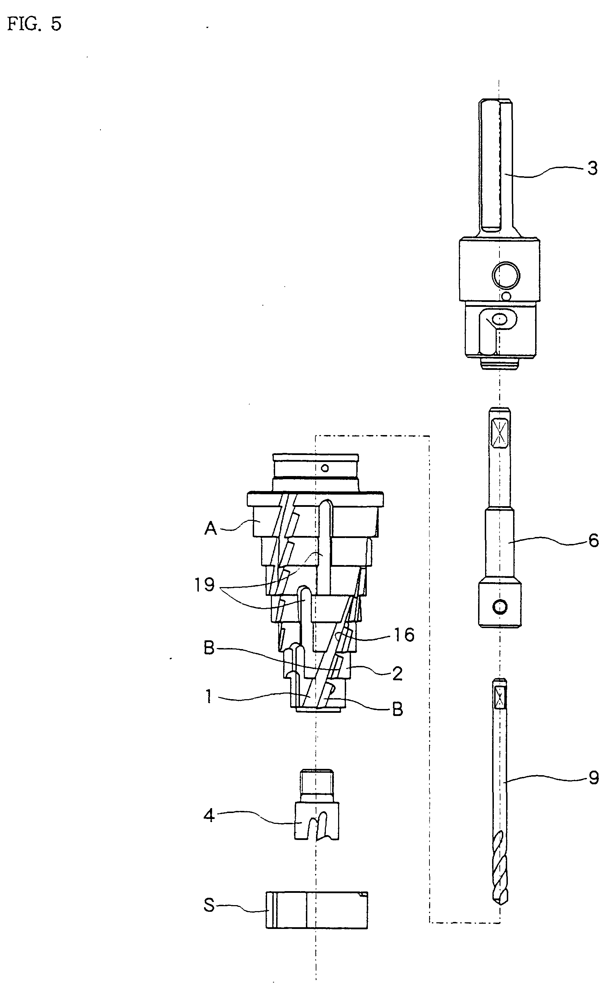

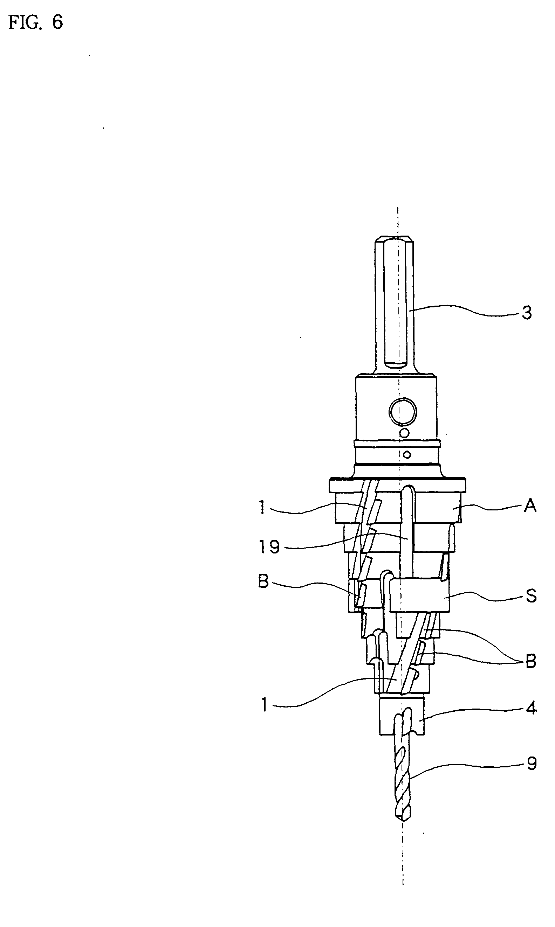

For the multistage bit having spiral grooves illustrated in Fig. 5, the same shaped stop can be fitted as illustrated in Fig. 6 in the same manner as in the multistage bit illustrated in Fig. 1 and Fig. 2.

As to other embodiments of a stopper, as illustrated in Fig. 3(a) and (b), there are respectively provided, at the central position in the vertical direction of each stage 2 of the base A, stop holes 12 extending in the radial direction and having undercut portions at their bases for holding a stop member S1, respectively. A stop pin 14 having an expanded part 14a disposed in expandable condition with a spring 13 on the side of the stop member S1 and the tip of the stop member S1 are inserted in the stop hole 12. As illustrated in Fig. 3(c), when, under the condition of the spring 13 being compressed, the stop pin 14 is inserted in the stop hole 12, and then the spring 13 is released in a state of the member S1 being kept in contact with the base side, then, as illustrated in Fig. 3(d), the diameter-expanded part 14a of the stop pin 14 expands the tip of the stop member S1 outward in the radial direction, and holds the tip of the stop member to the diameter expanded part at the tip in the undercut portion of the stop hole 12. For detaching the stop member S1 from the stop hole 12, under the condition of the stop pin 14 pushed to the base A side, i.e., under the condition of the spring 13 being compressed, pulling force is applied to draw out the stop member S1 and the stop pin 14 [ref. Fig. 3(c)]. The stop member S1 as shown in Fig. 3, is an integral one having a stepped shape in a radial direction and it is desirable to make the stop member to come into rotatable contact with the object being cut by providing separately a rotatable stop member on the outer periphery of the base end part of the stop member S1, so that contact with the object to be cut according to the rotation of the multistage bit results from contact by rotation (rolling contact).

Because this stop can be used in common for each stage, there is no necessity to provided several respective stops each having different ring diameters to meet the peripheral length of each stage as required in the stop of the embodiment shown in Fig. 2.

Also, even in the case where the longitudinal groove 1 as illustrated in Fig. 5 is formed in a spiral shape, fitting of this type of stopper can be made irrespective of the longitudinal groove shape.

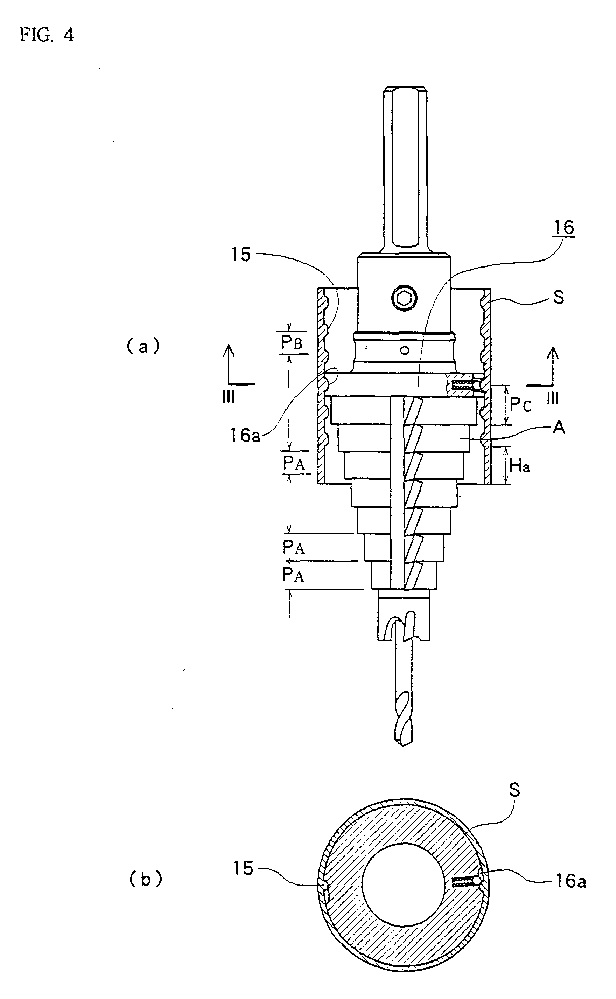

In another stop, as illustrated in Fig. 4, a plurality of projections 15 are formed with a pitch PB equal to the pitch (height) PA of each stage 2 of the base A of the multistage bit, at two diametrically opposite locations on the inner peripheral surface of the cylindrical stop S. Also there are formed on flange 16 above the uppermost drill stage two diametrically opposite semicircular recesses 16a in which a spring loaded ball 16b is buried at the center in a manner to be radially depressed so as to accommodate the projections 15. The several projections 15 of the stop S are fitted in by depressing the ball 16b at the central part of the recess 16a, and shown in Fig. 4(b), the stop S is rotated in either direction with respect to the base A, thereby making it possible to set the stop S on any of the several stages 2. Of course, it is so constructed that the cylindrical stop S has an inner diameter approximately equal to the outer diameter of the flange 16 and the height Ha from the lower end of the stop S of the projection 15 formed at the lower end of the inner peripheral surface is equal to or slightly higher than the height Pc from the lower end of the uppermost stage to the recess 16a of the flange 16.

This cylindrical stop is excellent in that there is no necessity to prepare a plurality of stops to fit the peripheral diameter of respective stages.

Even where the longitudinal groove 1 as illustrated in Fig. 5 is spirally formed, the stop can be easily fitted irrespective of the shape of the that groove.

Also, the multistage bit constructed as such can be applied to drilling work with replacement of each part in the manner as described below.

When drilling work is applied to a steel plate using the stage 2 of the fourth step from the tip, setting is made to have the lower end of the stop S positioned at least equal to the lower end of the fifth step accurately, a position slightly lower than the lower end of the fifth step; ref. Fig. 2(b)) from the tip. Drilling is then performed with a center drill 9 for setting the center position, and then the hole of a small diameter is provided with a tip drill 4. Also, drilling of the holes with the diameters corresponding to the related stages from the first to the third stage are performed in sequence, and finally drilling the hole of the fourth stage having the required diameter. When drilling a hole having the diameter corresponding to that of the fourth stage, drilling is finished when the lower end of the stop S comes into contact with the upper surface of the steel plate, thereby making it possible to effect drilling of the steel plate hole with the desired fourth stage diameter.

During the drilling procedure, the waste chips produced at each stage are discharged upwards along the longitudinal groove 1, thereby assuring the drilling work is accomplished smoothly.

Also, the center drill 9 and the tip drill 4 which are always used in the drilling work show the heaviest abrasion and damage. In the multistage bit according to this invention, the center drill 9 and the tip drill 4 can be simply replaced by loosening the bolt with a hexagonal wrench. Especially, since the center drill 9 which has high possibility of breakage is readily replaceable, even if this center drill 9 is broken, no such waste as requiring disposal of the whole multistage bit should occur.

Further, even in case of abrasion of the base A, if it is yet unnecessary to replace for example the center drill 9 and the tip drill 4 which have recently been replaced, then it is possible to replace only the base part A and to resume using the shank part 3, center drill 9 and tip drill 4 as they are. Thus, by carrying out replacement to the minimum extent as necessary, it becomes possible to use the multistage bit in the best condition at all times. Further, the replacement of the base part A can be simply performed manually without using any tool, since the projection 5d on the base A side is simply stopped by the stopping ball 7.

Contrary to the conventional prior art bit, there is no inconvenience requiring replacement of the whole multistage bit because of the damage or abrasion of a part, notwithstanding the usable parts still remaining.

In the above embodiment, a core drill type tip drill and a center drill are fitted to the tip of the base part, but the construction may be such as to fit a drill of the same type as the center drill of large diameter equal to the outer diameter of the tip drill.

According to the construction of the multistage bit as illustrated in Figs. 1 and 2 above, the waste chips cut with the blade B are usually discharged upward along the longitudinal groove 1, but when this groove is constructed by a spiral longitudinal groove 1 which slopes upward in the direction reverse to the direction of rotation of the multistage bit with an angle equal to the rake angle in front of the blade part B, the chips cut at the front face of the blade B of each stage 2 are smoothly discharged directly upward without being interrupted by the blade B which lies above, so that the cutting performance is further improved. The multistage bit illustrated in Figs. 5 and 6 is basically furnished with the same construction as the multistage bit shown in Figs. 1 and 2, except the construction of the longitudinal groove 1.

Namely, In Figs. 5 and 6, 3 indicates the shank, 4 indicates the tip drill, 6 indicates the center drilling sleeve, and 9 indicates the center drill. These are combined with the base A by means of the construction similar to that mentioned above (Fig. 2(a)). In the multistage bit according to this embodiment, a longitudinal groove 1 is spirally extended in an axial direction (vertical direction) on the outer periphery of the frustoconical base A, and the chip (carbide chip) constituting the blade B is provided on the periphery 1b on the rear side in the direction of rotation of the vertical groove 1 so as to have the same rake angle as the spiral inclination (coil angle) of the groove 1. Accordingly, in the multistage bit illustrated in Figs. 5 and 6, the recess 1c (recess 1c communicating with the groove 1a in Fig. 1(b)) provided forward of the direction of rotation of the blade B in the multistage bit shown in Figs. 1 and 2 does not exist. In Figs. 5 and 6, 19 indicates a vertical groove for the purpose of holding the stop S, and to this stop groove 19 a stop S having the same construction as that illustrated in Fig. 2 is maintained.

The multistage bit according to this embodiment also has excellent function and effect basically similar to those of the multistage bits mentioned above, except that the discharge of the waste chips cut with the blade B is more smooth.

Also, the stop for the multistage bit constructed as described above can be operated for drilling work as described below in carrying out the drilling, and the parts can be replaced.

Hereinafter, the operation of the stop for the multistage bit is explained along with the operation of the multistage bit.

Now, assuming one needs to carry out drilling of a steel plate with a stop S of a style as illustrated in Fig. 2 by the use of the fourth stage from the tip, first, setting is made so that the lower end of the stop S is positioned at the lower end of the fifth stage from the tip (accurately, a position slightly lower than the lower end of the fifth step; ref. Fig. 2(b)), after which drilling is performed with a center drill 9 for setting the center position, and then the hole of a small diameter is provided with a tip drill 4. Holes with the diameters corresponding to the related stages from the first to the third stage are then provided, and finally the hole having the diameter corresponding to the size of the fourth stage which is the objective hole is provided. Drilling may be stopped when the lower end of the stop S comes into contact with the upper surface of the steel plate, thereby making it possible to effect drilling with the desired fourth stage.

In case of using the stopper S of the form as illustrated in Fig. 3, by inserting a stop pin 14 in the stop hole 12 formed at the fifth stage from the tip and fixing in the similar manner, providing a hole having the diameter corresponding to the fourth stage can be effected in the same manner as above.

Furthermore, in case of using the stopper S of a type illustrated in Fig. 4, the projection 15 of the stop S is set to the flange 16 on the multistage bit so that the lower end of the stop comes to the lower end of the fifth stage, by which a hole having the diameter corresponding to the fourth stage can be effected in the same manner as above.

With stops of the styles as illustrated in Figs. 3 and 4, there is no necessity to provide plural stoppers to fit the diameter of each stage of the multistage bit, since a single stopper can be utilized for the drilling work using any stage of the multistage bit.

Using the stop illustrated in Fig. 4, when it is formed vertically symmetrical even if the lower end of the stop has worn out, the stop can be used by inverting it and in such a case, it becomes possible to double the durable life of the stop.

The waste chips produced at each stage are discharged upward along the longitudinal groove 1, thereby assuring to maintain the drilling work smoothly.

And, according to the multistage bit of the present invention, only the center drill, tip drill, or base part which has caused abrasion or damage needs to be replaced, so that extremely economical utilization without waste is possible. Also, replacement of various parts can be readily accomplished.

Further, according to the stop for the multistage bit of the present invention, holes having the desired diameter can be simply provided using various multistage bits. Also, the stop can be fitted to and removed from the multistage bit, simply and quickly by anybody.

## Claims

1. A multistage bit having a base part (A) with a profile in the form of a stepped conical body, each step (2a-2x) corresponding to a respective drilling stage (2), including a longitudinal groove (1) from the large diameter step (2x) to the small diameter step (2a) and a blade (B) projecting forward, downward and radially outward from the lower edge of each step at the peripheral trailing edge of the longitudinal groove thereby making it possible to drill a hole with a diameter corresponding to the desired drilling stage (2), and a tip drill stage -(4) having a blade of a diameter equal to or less than that of the small diameter step (2a),
characterized by:
the tip drill stage (4) being detachably mounted on the base part (A);
a shank (3) to which the base part (A) is detachably mounted;
a through-hole (5) formed axially in the base part (A), and a center bit (9) having a base passing through the hole (5) and detachably mounted on the shank (3); and
a center sleeve (6) detachably mounted between the shank (3) and the center bit (9).

2. A multistage bit according to Claim 1, wherein the longitudinal'groove (1) is in the form of an upward spiral sloping in reverse to the direction of rotation of the stepped conical body.

3. A multistage bit according to Claim 2, wherein each blade (B) has a rake angle equal to the spiral inclination of the longitudinal groove (1) and the front face of the blade (B) substantially aligns with the periphery of the rear side in the direction of rotation of the longitudinal groove (1).

4. A multistage bit according to any one of claims 1 to 3, wherein each blade (B) is formed by emplacing a carbide chip in the peripheral trailing edge of the longitudinal groove (1).

5. A multistage bit according to any one of claims 1 to 4, including a stop member (S) for setting the desired drilling stage (2).

6. A multistage bit according to Claim 5, wherein the stop member (S) is adjustable on the base part (A).

7. An assembly of a multistage bit according to any one of claims 1 to 4 and a stop member (S) comprising a split ring member having a free diameter slightly less than that of a specified stage of the multistage bit, one end (18) of the split ring member being inwardly formed to enter and to be engaged by a mounting groove (19) formed on the multistage bit, and the height (H) of the split ring member being equal to or slightly greater than the height of the specified stage.

8. An assembly according to claim 7, wherein the stop member (S) is of spring steel.

9. An assembly of a multistage bit according to any one of claims 1 to 4, and a stop member (S) comprising a hollow cylindrical form having an inner diameter which is approximately equal to the outer diameter of the uppermost stage (2) of the multistage bit, a plurality of axially spaced stop elements (15) on the interior surface of the cylindrical form with a pitch (P_{B}) equal to the pitch (P_{A}) of the drilling stages and the lower most stop element being spaced from the lower edge of the cylindrical form by a distance (Ha) equal to or slightly greater than the pitch (P_{A}) of the drilling stages.

10. An assembly according to claim 9, wherein the outer periphery of the uppermost stage includes a recess (16a) and a ball (16b) mounted therein to project from the recess and the stop elements (15) project from the inner surface of the cylindrical form so as to be engaged by the recess.

11. An assembly of a multistage bit according to any one of claims 1 to 4 and a stop member (S) comprising a stop pin (14) insertable into a radial hole (12) on each drilling stage (2) to project radially and a flange member (S1) through which the stop pin (14) is inserted into the hole (12) to project from a desired drilling stage (2).

12. An assembly according to claim 11, wherein the flange member has a stop flange which projects to or slightly beyond the lower edge of the desired drilling stage.

13. An assembly according to claim 11 or claim 12, wherein the stop pin (14) is provided with a spring (13) for urging the flange member against the drilling stage.

## Patentansprüche

1. Mehrstufenbohrer mit einem Grundteil (A) mit einem Profil in Form eines gestuften konischen Körpers, jede Stufe (2a-2x) entspricht einer jeweiligen Bohrstufe (2), mit einer longitudinalen Nut (1) von der Stufe (2x) großem Durchmessers zu der Stufe (2a) kleinem Durchmessers und einer Klinge (B), die von der unteren Kante jeder Stufe an der umfangsmäßig nachlaufenden Kante der longitudinalen Nut nach vorn, unten und radial außen vorsteht, wodurch es möglich ist, ein Loch mit einem Durchmesser entsprechend der gewünschten Bohrstufe (2) zu bohren, und einer Spitzenbohrstufe mit einer Klinge, deren Durchmesser gleich oder kleiner als der der Stufe (2a) kleinem Durchmessers ist, gekennzeichnet durch:
- die Spitzenborstufe (4) ist lösbar an dem Grundteil (A) angebracht,
- einen Schaft (3), an dem das Grundteil (A) abnehmbar angebracht ist,
- ein Durchgangsloch (5), das axial in dem Grundteil (A) ausgebildet ist, und einen Zentralbohrer (9) mit einer Basis, die durch das Loch (5) hindurch geht und lösbar an dem Schaft (3) angebracht ist, und
- einer Zentralhülse (6), die lösbar zwischen dem Schaft (3) und dem Zentralbohrer (9) montiert ist.

2. Mehrstufenbohrer nach Anspruch 1, wobei die longitudinale Nut (1) die Form einer Aufwärtsspirale aufweist, die entgegengesetzt zu der Drehrichtung des gestuften konische Körpers geneigt ist.

3. Mehrstufenbohrer nach Anspruch 2, wobei jede Klinge (B) einen Schnittwinkel gleich der Spiralneigung der longitudinalen Nut (1) aufweist und die Vorderseite der Klinge (B) im wesentlichen mit dem Umfang der Rückseite in Drehrichtung der longitudinalen Nut (1) ausgerichtet ist.

4. Mehrstufenbohrer nach einem der Ansprüche 1 bis 3, wobei jede Klinge (B) durch Einbetten eines Karbid-Stücks in die umfangsmäßig nachlaufende Kante der longitudinalen Nut (1) gebildet ist.

5. Mehrstufenbohrer nach einem der Ansprüche 1 bis 4, mit einem Anschlagteil zum Festsetzen der gewünschten Borstufe (2).

6. Mehrstufenbohrer nach Anspruch 5, wobei das Anschlagteil (S) an dem Grundteil (A) einstellbar ist.

7. Aufbau aus einem Mehrstufenbohrer nach einem der Ansprüche 1 bis 4 und einem Anschlagteil (S), das ein Spaltringteil mit einem freien Durchmesser aufweist, der geringfügig kleiner als der einer spezifizierten Stufe des Mehrstufenbohrers ist, ein Ende (18) des Spaltringteils ist nach innen gerichtet, um in eine Montagenut (19) einzugreifen, die an dem Mehrstufenbohrer ausgebildet ist, und die Höhe (H) des Spaltringteils ist gleich oder geringfügig größer als die Höhe der spezifizierten Stufe.

8. Aufbau nach Anspruch 7, wobei das Anschlagteil (S) aus Federstahl ist.

9. Aufbau aus einem Mehrstufenbohrer nach einem der Ansprüche 1 bis 4 und einem Anschlagteil, das eine hohle zylindrische Form mit einem Innendurchmesser aufweist, der annähernd gleich dem Außendurchmesser der obersten Stufe des Mehrstufenbohrers ist, mit einer Vielzahl von axial beabstandeten Stoppelementen (15) auf der inneren Oberfläche der zylindrischen Form mit einer Teilung (P_{B}) gleich der Teilung (P_{A}) der Bohrstufen, wobei das unterste Stoppelement in einem Abstand (Ha) gleich oder geringfügig größer als die Teilung (P_{A}) der Bohrstufen von der unteren Kante der zylindrischen Form beabstandet ist.

10. Aufbau nach Anspruch 9, wobei der äußere Umfang der obersten Stufe eine Ausnehmung (16a) aufweist und eine Kugel (16b), die darin angebracht ist, um aus der Ausnehmung hervorzustehen, und die Stoppelemente (15) von der inneren Oberfläche der zylindrischen Form vorstehen, um in die Ausnehmung einzugreifen.

11. Aufbau aus einem Mehrstufenbohrer nach einem der Ansprüche 1 bis 4 und einem Anschlagteil (S), das einen Arretierstift (14), der in ein radiales Loch (12) in jeder Borstufe (2) einsetzbar ist, um radial vorzustehen, und ein Flanschteil (S1) umfaßt, durch welches der Arretierstift (14) in das Loch (12) eingesetzt ist, um von der gewünschten Borstufe (2) vorzustehen.

12. Aufbau nach Anspruch 11, wobei das Flanschteil einen Anschlagflansch aufweist, welcher bis zu oder geringfügig über die untere Kante der gewünschten Borstufe vorsteht.

13. Aufbau nach einem der Ansprüche 11 oder 12, wobei der Arretierstift (14) mit einer Feder (13) versehen ist, um das Flanschteil gegen die Borstufe zu drängen.

## Revendications

1. Foret étagé comprenant une partie de base (A) qui présente un profil en forme de corps conique étagé, dont les épaulements (2a-2x) correspondent à des épaulements de perçage respectifs (2) et qui comporte une rainure longitudinale (1) de l'épaulement à grand diamètre (2x) à l'épaulement à faible diamètre (2a) et une lame (B) qui fait saillie vers l'avant, vers le bas et radialement vers l'extérieur à partir du bord inférieur de chaque épaulement, sur le bord arrière périphérique de la rainure longitudinale, ce qui permet de percer un trou d'un diamètre correspondant à l'épaulement de perçage (2) souhaité ; et un épaulement formant foret d'extrémité (4) qui est pourvu d'une lame d'un diamètre égal ou inférieur à celui de l'épaulement à faible diamètre (2a), caractérisé par :
un montage amovible de l'épaulement formant foret d'extrémité (4) sur la partie de base (A) ;
une tige (3) sur laquelle la partie de base (A) est montée de manière amovible ;
un trou traversant (5) formé axialement dans la partie de base (A), et un foret de centrage (9) comportant une base qui traverse le trou (5) et qui est montée de manière amovible sur la tige (3) ; et
une douille de centrage (6) qui est montée de manière amovible entre la tige (3) et le foret de centrage (9).

2. Foret étagé selon la revendication 1, dans lequel la rainure longitudinale (1) a la forme d'une spirale dirigée vers le haut et inclinée en sens inverse par rapport au sens de rotation du corps conique étagé.

3. Foret étagé selon la revendication 2, dans lequel chaque lame (B) présente un angle de dépouille égal à l'inclinaison de la spirale de la rainure longitudinale (1), et la face avant de la lame (B) est pratiquement dans l'alignement de la périphérie du côté arrière, dans le sens de rotation, de la rainure longitudinale (1).

4. Foret étagé selon l'une quelconque des revendications 1 à 3, dans lequel chaque lame (B) est formée grâce à un taillant en carbure placé dans le bord arrière périphérique de la rainure longitudinale (1).

5. Foret étagé selon l'une quelconque des revendications 1 à 4, comportant un élément de butée (S) pour fixer l'épaulement de perçage (2) voulu.

6. Foret étagé selon la revendication 5, dans lequel l'élément de butée (S) est réglable sur la partie de base (A).

7. Ensemble formé d'un foret étagé selon l'une quelconque des revendications 1 à 4, et d'un élément de butée (S) défini par un élément annulaire fendu dont le diamètre libre est légèrement inférieur à celui d'un épaulement spécifié du foret étagé, une extrémité (18) de l'élément annulaire fendu étant recourbée vers l'intérieur pour entrer et venir en prise dans une rainure de montage (19) formée sur le foret étagé, et la hauteur (H) de l'élément annulaire fendu étant égale ou légèrement supérieure à la hauteur de l'épaulement spécifié.

8. Ensemble selon la revendication 7, dans lequel l'élément de butée (S) est en acier à ressorts.

9. Ensemble formé d'un foret étagé selon l'une quelconque des revendications 1 à 4, et d'un élément de butée (S) présentant une forme cylindrique creuse avec un diamètre intérieur approximativement égal au diamètre extérieur de l'épaulement (2) supérieur du foret étagé, plusieurs éléments de butée (15) espacés axialement sur la surface intérieure de la forme cylindrique étant formés suivant un écartement (P_{B}) égal à l'écartement (P_{A}) des épaulements de perçage, et l'élément de butée du bas étant espacé du bord inférieur de la forme cylindrique suivant une distance (Ha) égale ou légèrement supérieure à l'écartement (P_{A}) des épaulements de perçage.

10. Ensemble selon la revendication 9, dans lequel la périphérie extérieure de l'épaulement supérieur comporte un creux (16a) et une bille (16b) montée dans celui-ci de manière à dépasser du creux, et les éléments de butée (15) font saillie sur la surface intérieure de la forme cylindrique de manière à venir en prise dans le creux.

11. Ensemble formé d'un foret étagé selon l'une quelconque des revendications 1 à 4, et d'un élément de butée (S) comprenant une tige de butée (14) apte à être insérée dans un trou radial (12) prévu sur chaque épaulement de perçage (2), de manière à faire saillie radialement, et un élément formant collerette (S1) à travers lequel la tige de butée (14) est insérée dans le trou (12) pour faire saillie à partir d'un épaulement de perçage (2) souhaité.

12. Ensemble selon la revendication 11, dans lequel l'élément formant collerette a une collerette de butée qui fait saillie jusqu'au bord inférieur de l'épaulement de perçage souhaité, ou légèrement au-delà de ce bord.

13. Ensemble selon la revendication 11 ou 12, dans lequel la tige de butée (14) est pourvue d'un ressort (13) destiné à pousser l'élément formant collerette contre l'épaulement de perçage
